# EUROPEAN PATENT APPLICATION

(11) **EP 2 503 822 A1**
(43) Date of publication of application: **26.09.2012**
(21) Application number: 11158857.0
(22) Date of filing: 18.03.2011
(51) Int. Cl.: H04W 36/30

(54) **Method and system for facilitating handover for a mobile device**

(71) Applicant: Research In Motion Limited, Waterloo, ON N2L 3W8 (CA)
(72) Inventor: Hanov, Steven Michael, Waterloo Ontario N2L 3W8 (CA)
(74) Representative: Moore, Barry

(57) **Abstract**

A method and apparatus for enabling handover of a mobile device in a network supporting a single unacknowledged control block on a control channel, where if channel conditions exceed a threshold, the method sends, from a mobile device, a request or message utilizing a control channel; and if channel conditions do not exceed the threshold, the method delays the sending of the request or message to permit a handover message to use the control channel.

## Description

The present disclosure relates to mobile devices and in particular to mobile devices having a control channel supporting only one control block at a time.

The present disclosure relates to mobile devices communicating in a network, and in one embodiment deals with the global system for mobile communications (GSM) networks and enhanced data rate for GSM evolution (EDGE) handsets.

Many GSM networks are now enabling dual transfer mode (DTM). This feature gives EDGE and General Packet Radio Service (GPRS) handsets the ability to sent and receive data during a phone call, and is described, for example, in the 3rd Generation Partnership Project, "Radio Access Network; Dual Transfer Mode (DTM) Stage 2", Technical Specification 43.055 v. 9.0.0, 2009-12-10 and 3rd Generation Partnership Project "Mobile Radio Interface Layer 3 Specification, Radio Resource Control Protocol", Technical Specification 44.018 v. 10.1.0, 2010-12-22, the contents of both of which are incorporated herein by reference. Further, 3rd Generation Partnership Project, "Mobile Station ― Base Station System (MS-BSS) interface; Data Link (DL) layer specification", Technical Specification 44.006 v. 9.1.0, 2010-03-25 describes the LAPDm protocol and acknowledgments, and is also incorporated herein by reference.

The dedicated connection for dual transfer mode is comprised of the traffic channel (TCH), the slow associated control channel (SACCH), and the fast associated control channel (FACCH). The TCH is used for voice. However, certain flags may be set to indicate that some bursts of the TCH are "stolen" and should be interpreted as FACCH.

DTM procedures may also be performed over the single dedicated control channel (SDCCH). The SDCCH is used when higher layer signaling is to be performed, but voice traffic is not needed.

The network and mobile use the FACCH or SDCCH for many procedures during a call, including, but not limited to, call set-up, call tear down, and higher layer procedures such as location area update. When DTM is enabled in the network, the FACCH or SDCCH are also used for additional procedures including the set-up of data connection and the transmission of certain signaling messages from upper layers.

The FACCH or SDCCH channels may only support one outstanding radio resource control block at a time for each direction. This is known as "Stop and Wait" ARQ. Each block must be fully acknowledged before another block can be transmitted. Certain control messages may be split over several radio resource control blocks, each of which requires an acknowledgement. Examples of such large messages include signaling information from upper layers, and the packet assignment. Each radio resource block is transmitted at any available opportunity until it is acknowledged. If other control messages need to be sent, they are queued until all prior control messages have been acknowledged.

The present disclosure provides a method for enabling handover of a mobile device in a network, the method comprising: if channel conditions exceed a threshold, sending, from a mobile device, a request or message utilizing a control channel; and if channel conditions do not exceed the threshold, delaying the sending of the request or message to permit a handover message to use the control channel.

In one embodiment, the network supports only a single unacknowledged control block on the control channel. In a further embodiment, the method includes checking, prior to the sending or delaying, whether the channel conditions exceed a threshold.

In one embodiment, the mobile device is on a circuit switched call and the method is performed utilizing dual transfer mode ('DTM'). In one embodiment the request or message is a DTM REQUEST. In a further embodiment the request or message is an upper layer control message.

In one embodiment the delaying is for one measurement cycle. In one embodiment the method further comprises, after the delaying, repeating the checking step. In one embodiment the method further comprises ending if a stop condition is realized, the stop condition being a handover or ending a circuit switched call.

In one embodiment the delaying further comprises buffering or queuing uplink data. In one embodiment, the checking determines if a criteria is met, the criteria being one of: an RXQUAL_SUB level is below a threshold for two or more measurement periods; the RXQUAL_SUB level of burst during a measurement period falls below a threshold; or the RXQUAL_SUB level is below a threshold and a neighbor cell is stronger than a serving cell.

The present disclosure further provides a mobile device configured for enabling handover in a network, the mobile device comprising: a processor; a communications subsystem; and memory, wherein the processor, communications subsystem and memory cooperate to: check whether channel conditions exceed a threshold; if yes, send a request or message utilizing the control channel; if no, delay the sending of the request or message to permit a handover message to use the control channel.

In one embodiment the processor, communications subsystem and memory cooperate to check and send or delay while the mobile device is on a circuit switched call, the sending utilizing dual transfer mode ('DTM'). In one embodiment the request or message is a DTM REQUEST or an upper layer control message.

In a further embodiment the processor, communications subsystem and memory cooperate to delay for one measurement cycle. In a further embodiment the processor, communications subsystem and memory further cooperate to repeat the check after the delaying. In the further embodiment, the processor, communications subsystem and memory cooperate to end processing if a stop condition is realized, the stop condition being a handover or ending a circuit switched call.

In one embodiment, the memory is configured to buffer or queue uplink data.

The present disclosure still further provides a method for enabling handover of a mobile device at a network element, the method comprising: checking, at the network element, whether channel conditions exceed a threshold; if yes, sending a request or message utilizing the control channel; if no, prioritizing a handover message over the request or message, or sending the handover message to the mobile device.

In one embodiment the mobile device is on a circuit switched call and the method is performed utilizing dual transfer mode ('DTM'). In one embodiment, the request or message is a DTM ASSIGNMENT, PACKET ASSIGNMENT or upper layer control message.

In one embodiment, the prioritizing further comprising delaying to determine if channel conditions are improving or deteriorating.

The present disclosure still further provides a method for enabling handover of a mobile device at a network element, the method comprising: if channel conditions exceed a threshold, sending, from the network element, a request or message utilizing a control channel; and if channel conditions do not exceed the threshold, prioritizing a handover message over the request or message, or sending the handover message from the network element to the mobile device.

In one embodiment, the network supports only a single unacknowledged control block on the control channel. In a further embodiment, the method includes, prior to the sending or delaying, whether the channel conditions exceed a threshold.

In one embodiment, the mobile device is on a circuit switched call and sends data utilizing dual transfer mode ('DTM'). In one embodiment the request or message is a DTM ASSIGNMENT, PACKET ASSIGNMENT or upper layer control message. In one embodiment the processor, communications subsystem and memory further cooperate delay during prioritization to determine if channel conditions are improving or deteriorating.

The present disclosure will be better understood with reference to the drawings, in which:
**Figure 1** is a data flow diagram showing DTM establishment and data transfer;
**Figure 2** is a data flow diagram showing DTM establishment and data transfer in deteriorating channel conditions;
**Figure 3** is flowchart showing a process for facilitating handover from a mobile device;
**Figure 4** is flowchart showing a process for facilitating handover from a network element; and
**Figure 5** is a block diagram of a mobile device capable of being used with the present methods and systems.

When both the network and the mobile device support DTM, and the mobile device has uplink data to send, the mobile will transmit a DTM request to the network over a transport channel. Such transport channel may be the FACCH channel (or the SDCCH if not in a voice call). The network will then respond with a DTM REJECT, a DTM ASSIGNMENT, or PACKET ASSIGNMENT message. The first one rejects the request, the second two assign additional resources to set up a temporary block flow (TBF) alongside the dedicated connection.

On the network side, when a network has downlink data to send, it may send a DTM ASSIGNMENT or PACKET ASSIGNMENT without having first received a DTM request.

When a mobile device is in a voice call and is enabled for DTM procedures, it may send a DTM request to the network. While the DTM request is a relatively short message, the response from the network such as the DTM ASSIGNMENT or PACKET ASSIGNMENT message are relatively long, and thus may be broken up into several LAPDm frames, each requiring acknowledgment before proceeding to the next frame. The establishment of a DTM assignment is performed often in a typical mobile device since data is bursty.

As indicated above, the transport channel allows only one control message at a time and requires acknowledgement of the control message. Thus, if the network is sending a DTM response, an acknowledgement is required before other control messages may be sent between the mobile device and the network. This may be problematic in deteriorating channel conditions when handover is necessary. During DTM procedures, the handover command is queued if other control blocks require acknowledgement, and thus handover cannot be preformed. The problem is that once a radio resource block is transmitted it must be acknowledged before the next one may be sent. When the link is of declining quality, the same radio resource block may have to be sent dozens of times, taking several seconds. This may lead to the dropping of a call, leading to negative user experience and additional network traffic in order to re-establish the connection between the mobile device and the network.

In one embodiment, the present method and system provides for the suppression of DTM requests when the channel (link) quality is found to be below a certain threshold.

The channel quality may be determined in a variety of ways, and the present system and method are not limited to any particular measurement of channel quality. In one embodiment, the check may be whether the link quality is below a threshold for a set period of time. For example, the threshold may be based on the RXQUAL value. If the dedicated connection is below the RXQUAL value or threshold for 960 milliseconds, then any DTM requests are delayed until channel quality rises again. In this way, the dedicated signalling link is kept free for potential handovers.

In a further embodiment, a handset may use additional criteria. It may initiate suppression of DTM requests when the RXQUAL of the serving cell is low and it has detected a neighboring cell of much greater strength for a certain period of time.

Other solutions would be apparent to those skilled in the art having regard to the present disclosure.

While the present disclosure is described in relation to GSM and dual transfer mode on GSM, the present methods and systems could be used for any network type having a channel for a control block requiring acknowledgment before other control blocks can be sent, and where the channel is used for multiple procedures including handover. The use of GSM and dual transfer mode is therefore only meant as an example.

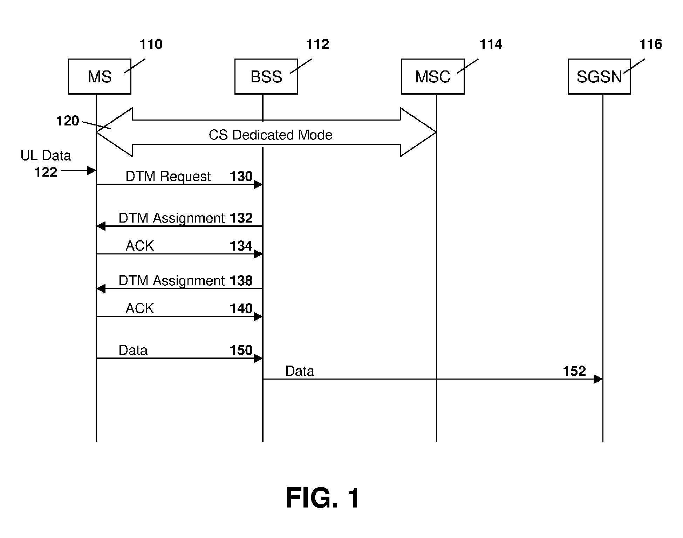

Reference is now made to **Figure 1. Figure 1** shows a signalling diagram in which a mobile device/mobile station (MS) **110** communicates with a base station sub-system (BSS) **112**. As will be appreciated by those in the art, a base station subsystem includes the base transceiver (BTS) and base station controller (BSC).

**MS 110** can be any mobile device, and could also be referred to as user equipment, data enabled cellular telephone, personal digital assistant (PDA), laptop, among others.

MS **110** further communicates with a mobile switching center (MSC) **114** which further communicates with a services GPRS support node (SGSN) **116.**

In the embodiment of **Figure 1**, **MS 110** is in a circuit switched dedicated mode, as shown by arrow **120** with MSC **114**. In this case, MS **110** is communicating over a circuit switched channel with the mobile station controller **114.**

MS **110** receives data that needs to be sent to the network, as shown by arrow **122.** If the mobile station and network are both dual transfer mode capable and the data or arrow **122** meets certain predefined criteria, MS **110** sends a DTM request, as shown by arrow **130.**

In response to DTM request at arrow **130,** the base station subsystem **112** sends a DTM Assignment, as shown by arrow **132**, back to MS **110.**

The DTM Assignment includes a significant amount of data and using dual transfer mode cannot be sent, in general, over one message **132**. Thus, as shown in **Figure 1**, an acknowledgement is sent for the first DTM Assignment packet received at arrow **132.** The acknowledgement is shown by arrow **134.**

Upon receiving the acknowledgement, BSS **112** sends a further DTM Assignment package as shown by arrow **138** and an acknowledgement sent back is shown by arrow **140.** This continues until the DTM assignment is completed.

Once DTM is established, data is sent to BSS **112**, as shown by arrow 150. The data is then forwarded to the SGSN, as shown by arrow **152**.

The multi-packet sending of the DTM Assignment can tie up resources, especially in the case of deteriorating channel conditions.

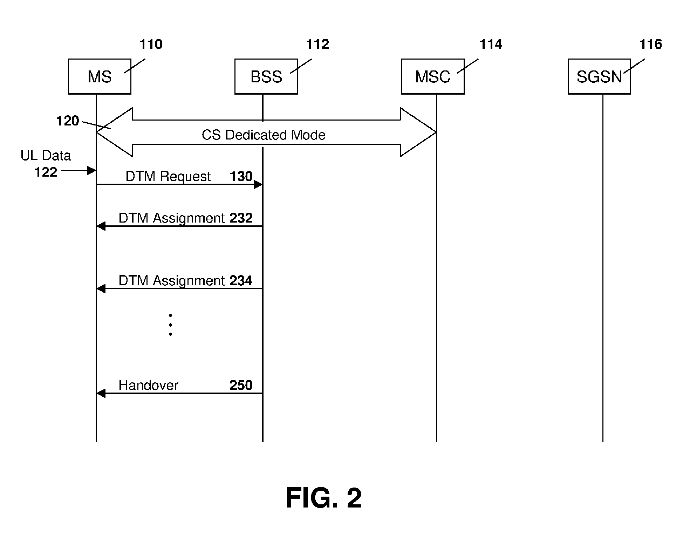

Reference is now made to **Figure 2****,** which shows an example of signaling during deteriorating channel conditions. In **Figure 2**, MS **110** still communicates with BSS **112,** MSC **114** and SGSN **116**.

Further, MS **110** is in a dedicated circuit switched mode, as shown by arrow **120**.

Data arrives, shown by arrow **122**, and a DTM request, shown by arrow **130**, is sent to the BSS **112.**

In response to the DTM request of arrow **130**, a first DTM Assignment packet, shown by arrow **232**, is sent to MS **110**. The DTM assignment of arrow **232** may be received by MS 110, but due to deteriorating channel conditions, MS 110 may not be able to decode the DTM assignment. In this regard, no acknowledgement is sent to BSS **112** and BSS **112** is forced to resend the same first DTM assignment packet, as shown by arrow **234**, after a specific time interval. In the example of **Figure 2**, the channel conditions have further deteriorated and mobile station **110** may not receive the DTM assignment shown by arrow **234** or may not be able to decode it. Again, no acknowledgement is returned.

Base station sub-system **112** continues to send to the first DTM assignment packet (not shown) until a maximum number of DTM Assignment packets are sent at which point a time-out occurs. At best, BSS **112** may then use the channel to send a handover indication to MS **110** as shown by arrow **250**. However, a likely scenario is that the call shown by arrow **120** is dropped prior to the handover command being sent.

Specifically, the lack of acknowledgement of the DTM assignment requires the resending of the DTM assignment packet until a maximum threshold is reached. It is only at this point that the handover indication may be sent to MS **110**. This causes a delay in the sending of the transition indication and may result in the call shown by arrow **120** being dropped due to the deteriorating channel conditions. A call being dropped leads to a negative user experience.

In other embodiments, instead of a DTM request, GMM control messages or other upper layer messages, encapsulated in a GPRS transport tunneling protocol (GTTP) packet may be sent from the network to MS **110**. The total size of the packet is suck that it fits onto the number of L2 LAPDm frames configured by the network. Again, such upper layer control messages can be sent over the fast associated control channel (FACCH) and may be sent by either MS **110** or BSS **112** to the other of the MS **110** or BSS **112**. The sending of the upper layer control messages over the control channel ties up the control channel and requires an acknowledgement. Again, the deteriorating channel conditions may lead to a call being dropped if the upper layer control messages cannot be acknowledged by the other party.

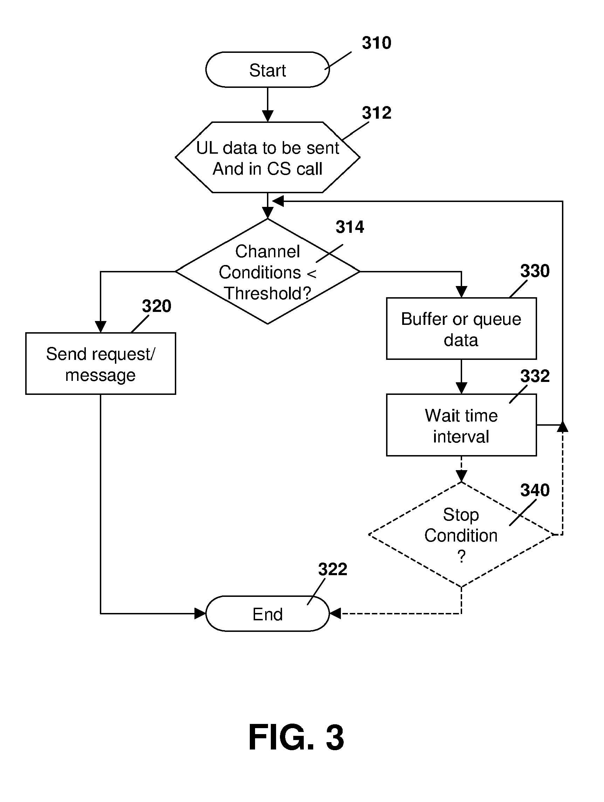

Reference is now made to **Figure 3**, which shows a flow diagram for a method in accordance with the present disclosure. The process of **Figure 3** starts at block **310** has a pre-condition, shown at block **312**, that the mobile device is in a circuit switched call and that uplink data is ready to be sent. In one embodiment, the data may be sent using dual transfer mode, requiring a dual transfer mode request. In a further embodiment, the data may be an upper layer control message that needs to be sent in the uplink direction. In other embodiments the data may be any other data that would tie up the control channel.

The process then proceeds to block **314** in which channel conditions are checked to determine whether or not they are less than a threshold. As will be appreciated by those in the art having regard to the present disclosure, various indications on a mobile device such as MS **110** may be used to determine whether or not channel conditions are less than a threshold. The downlink transport channel may be monitored to get a good indication of what the channel conditions are like. Also, in one embodiment the mobile station may get information about channel quality every 480 milliseconds and thus build up a channel information measurement.

For example, one measurement may use the RXQUAL_SUB level. If the RXQUAL_SUB level of the bursts during the measurement period (as defined in 3rd Generation Partnership Project "Radio Subsystem Link Control", Technical Specification" 45.008, v. 9.5.0, 2010-12-21, the contents of which are incorporated by reference) falls below a certain threshold then the mobile device may determine there is an need for handover. For example, the mobile may detect the need for handover when the RXQUAL_SUB levels reach 6 or 7.

Further, if the RXQAL_SUB level reaches a threshold for a certain number of measurement periods, then this may indicate a need for handover. For example, if the threshold is reached for at least two consecutive measurement periods. Thus, if the dedicated connection is below RXQUAL 5 for 960 milliseconds, then any DTM requests are delayed until channel quality rises again.

A further indication that transition might be required is if the RXQUAL_SUB criteria is reached, and there is a stronger candidate cell in a neighbor list. For example, if a neighbor list is at least 5 dBm stronger than the serving cell.

Other threshold measurements could be used.

If channel conditions are not less than a threshold, this indicates the channel conditions are good enough to establish dual transfer mode and the process proceeds to block **320** in which the request or message is sent to the network and the process proceeds as in **Figure 1**.

The process of **Figure 3** proceeds from block **320** to block **322** and ends.

Conversely, if it is found in block **314** that the channel conditions are less than a threshold, then the process proceeds to block **330** in which the uplink data to be sent is buffered or queued.

The process then proceeds to block **332** in which the mobile device waits for a predetermined time period. As will be appreciated by those in the art, in certain GSM networks, channel information is received every 480 milliseconds about channel quality. Thus, the delay in block 332 may be 480 milliseconds until a further channel condition determination can be made.

From block **332**, the process proceeds to block **314** in which a check is made again to determine whether channel conditions are still below a threshold. The process continues to loop until channel conditions improve.

In an alternative embodiment, from block **332**, the process may instead proceed to block **340** in which a stop condition is checked. Various stop conditions can be utilized. For example, since the control channel may not be blocked by the DTM REQUEST and DTM ASSIGMNENT when the process proceeds to blocks **330** and **332**, a handover command may be received by MS **110**. In this case a handover may occur in which a stop condition may be the handover of the mobile device. Upon handover, a check could be made to determine whether the new network supports dual transfer mode and the process may be restarted for the new network if dual transfer mode is supported by the new network.

An further stop condition may be that the circuit switched call has ended. In this case, the communication of the uplink data may be sent as if it was not in DTM.

If, from block **340**, a stop condition is realized, the process may proceed to block **322** and end. The ending at block **322** may result in the process being restarted or a separate process being started to send the data.

Conversely, if a stop condition has not been realized from block **340** the process proceeds back to block **314** and checks the channel condition to determine whether or not it is less than a threshold.

From the above, the process of **Figure 3** blocks or delays the sending of a data message or request while channel conditions are less than a threshold. This may facilitate handover if channel conditions further continue to deteriorate.

Network side functionality

The above device side functionality can further be extended and used on the network side. Network side, as used herein, includes BSS **112**, MSC **114**, SGSN **116** or any other network entity that may provide data directly or indirectly to a MS **110.**

On the network side, the delay of handover when a mobile device is in a circuit switched dedicated mode may be accomplished by checking channel conditions to determine whether or not downlink data should be sent to MS **110.**

In one embodiment, the downlink data may be in the form of a DTM ASSIGNMENT when data arrives for the MS **110**. In other embodiments, the downlink data may be an upper layer control message to be sent to MS **110**. Other downlink data that may use a downlink transport channel may also cause issues when channel conditions are deteriorating.

In accordance with the present disclosure, the network may delay the sending of downlink data and prioritize a handover command in deteriorating channel conditions.

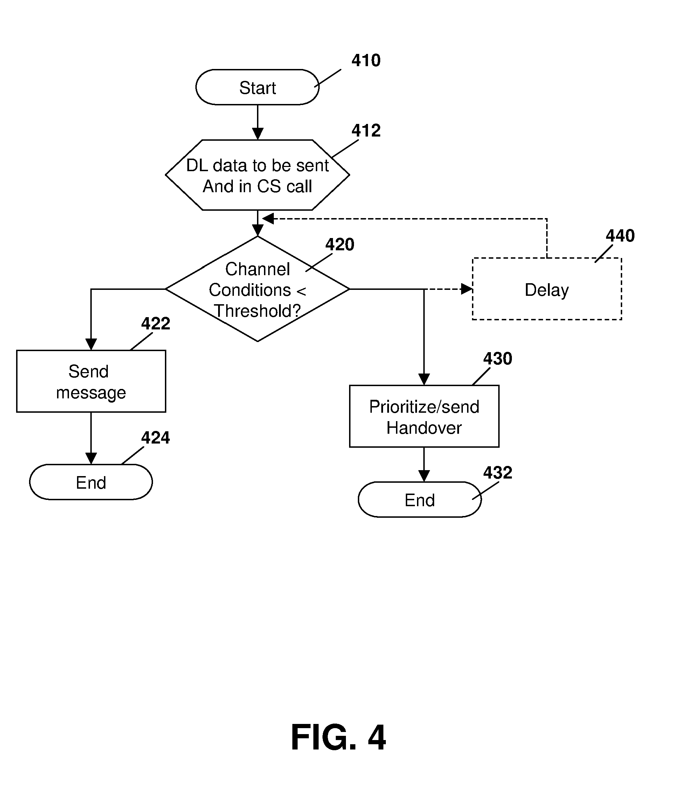

Reference is now made to **Figure 4**. In **Figure 4**, the process starts at block **410** and a pre-condition for the process is that downlink data is available in that the mobile is in a circuit switched dedicated mode, as shown by block **412**.

The process proceeds to block **420** in which a check of channel conditions is made. The check can be similar to the check made by a mobile device. Further, the network element will have a better picture of channel conditions since multiple devices are likely providing data that can be used to check the channel conditions.

If channel conditions are above a threshold, the process proceeds from block **420** to block **422** in which the message is send. This may be a DTM ASSIGNMENT, upper layer control message, among others.

The process then proceeds from block **422** to block **424** and ends.

From block **420**, if it is determined that channel conditions are below a threshold, the mobile may proceed to block **430**. In one embodiment, the network may prioritize or send a handover command if network conditions warrant the handover. In this way, the handover is prioritized over downlink data to ensure that the call is not dropped.

The process then proceeds from block **430** to block **432** and ends.

In an alternative embodiment, the process may proceed from block **420** to a block **440** in which a delay is introduced. The delay may be used to determine whether channel conditions are continuing to deteriorate or whether they may improve. The process then may proceed back to block **420** and check channel conditions against thresholds.

In this way, handovers are not sent immediately but only sent after a certain period of time when network conditions require it. Other alternatives will be apparent to those skilled in the art having regard to the present disclosure.

The above therefore provides that a network may prioritize and send handover commands when network conditions warrant rather than sending downlink data. This may prevent a call from being dropped as a result of the control channel being blocked waiting for an acknowledgement message or data when a handover message is required to be sent.

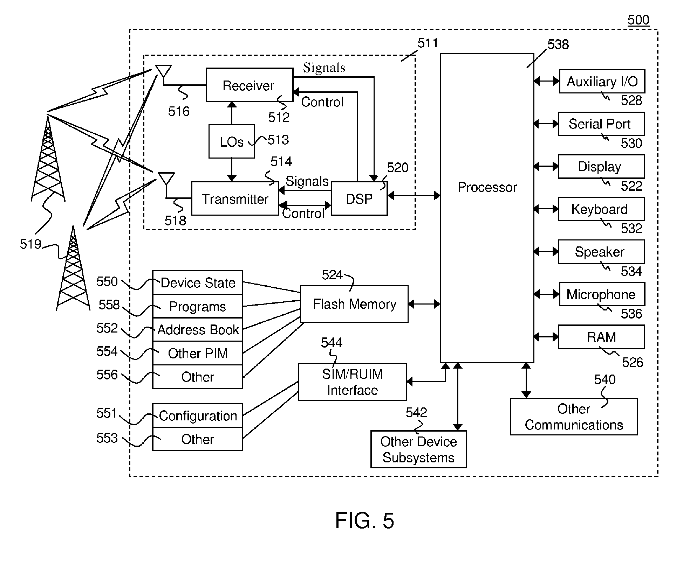

The above may be performed on any mobile device. One exemplary mobile device is shown below with regard to **Figure 5****.**

As will be appreciated, the delay or blocking of a DTM request or uplink data during a call may be done utilizing the processor on a mobile device, in combination with a communications subsystem of the mobile device. One such exemplary mobile device is illustrated below with reference to **Figure 5****.** The mobile device of **Figure 5** is however not meant to be limiting and other mobile devices could also be used.

Mobile device **500** is typically a two-way wireless communication device having voice and data communication capabilities. Mobile device **500** generally has the capability to communicate with other computer systems on the Internet. Depending on the exact functionality provided, the mobile device may be referred to as a data messaging device, a two-way pager, a wireless e-mail device, a cellular telephone with data messaging capabilities, a wireless Internet appliance, a wireless device, a user equipment, or a data communication device, as examples.

Where mobile device **500** is enabled for two-way communication, it will incorporate a communication subsystem **511**, including both a receiver **512** and a transmitter **514**, as well as associated components such as one or more antenna elements **516** and **518**, local oscillators (LOs) **513**, and a processing module such as a digital signal processor (DSP) **520**. As will be apparent to those skilled in the field of communications, the particular design of the communication subsystem **511** will be dependent upon the communication network in which the device is intended to operate.

Network access requirements will also vary depending upon the type of network **519**. In some networks, network access is associated with a subscriber or user of mobile device **500**. A mobile device may require a removable user identity module (RUIM) or a subscriber identity module (SIM) card in order to operate on a network. The SIM/RUIM interface **544** is normally similar to a card-slot into which a SIM/RUIM card can be inserted and ejected. The SIM/RUIM card can have memory and hold many key configurations **551**, and other information **553** such as identification, and subscriber related information.

When required network registration or activation procedures have been completed, mobile device **500** may send and receive communication signals over the network **519**. As illustrated in **Figure 5**, network **519** can consist of multiple base stations communicating with the mobile device. Network **519** can consist of network elements (not shown) having processors, memory and communication subsystems capable of performing the method of **Figure 4**, either independently or in conjunction with other network elements.

Signals received by antenna **516** through communication network **519** are input to receiver **512,** which may perform such common receiver functions as signal amplification, frequency down conversion, filtering, channel selection and the like, and in the example system shown in **Figure 5**, analog to digital (A/D) conversion. A/D conversion of a received signal allows more complex communication functions such as demodulation and decoding to be performed in the DSP **520**. In a similar manner, signals to be transmitted are processed, including modulation and encoding for example, by DSP **520** and input to transmitter **514** for digital to analog conversion, frequency up conversion, filtering, amplification and transmission over the communication network **519** via antenna **518**. DSP **520** not only processes communication signals, but also provides for receiver and transmitter control. For example, the gains applied to communication signals in receiver **512** and transmitter **514** may be adaptively controlled through automatic gain control algorithms implemented in DSP **520**.

Mobile device **500** generally includes a processor **538** which controls the overall operation of the device. Communication functions, including data and voice communications, are performed through communication subsystem **511**. Processor **538** also interacts with further device subsystems such as the display **522**, flash memory **524**, random access memory (RAM) **526**, auxiliary input/output (I/O) subsystems **528**, serial port **530**, one or more keyboards or keypads **532**, speaker **534**, microphone **536**, other communication subsystem **540** such as a short-range communications subsystem and any other device subsystems generally designated as **542**. Serial port **530** could include a USB port or other port known to those in the art.

Some of the subsystems shown in **Figure 5** perform communication-related functions, whereas other subsystems may provide "resident" or on-device functions. Notably, some subsystems, such as keyboard **532** and display **522**, for example, may be used for both communication-related functions, such as entering a text message for transmission over a communication network, and device-resident functions such as a calculator or task list.

Operating system software used by the processor **538** may be stored in a persistent store such as flash memory **524**, which may instead be a read-only memory (ROM) or similar storage element (not shown). Those skilled in the art will appreciate that the operating system, specific device applications, or parts thereof, may be temporarily loaded into a volatile memory such as RAM 526. Received communication signals may also be stored in RAM **526**.

As shown, flash memory **524** can be segregated into different areas for both computer programs **558** and program data storage **550, 552, 554** and **556**. These different storage types indicate that each program can allocate a portion of flash memory **524** for their own data storage requirements. Processor **538**, in addition to its operating system functions, may enable execution of software applications on the mobile device. A predetermined set of applications that control basic operations, including at least data and voice communication applications for example, will normally be installed on mobile device **500** during manufacturing. Other applications could be installed subsequently or dynamically.

Applications and software, such as those for implements the process of **Figure 3****,** may be stored on any computer readable storage medium. The computer readable storage medium may be a tangible or intransitory/non-transitory medium such as optical (e.g., CD, DVD, etc.), magnetic (e.g., tape) or other memory known in the art.

One software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application may have the ability to send and receive data items, via the wireless network **519**. In one embodiment, the PIM data items are seamlessly integrated, synchronized and updated, via the wireless network **519,** with the mobile device user's corresponding data items stored or associated with a host computer system. Further applications may also be loaded onto the mobile device 500 through the network **519,** an auxiliary I/O subsystem 528, serial port 530, short-range communications subsystem **540** or any other suitable subsystem **542,** and installed by a user in the RAM **526** or a non-volatile store (not shown) for execution by the processor **538.** Such flexibility in application installation increases the functionality of the device and may provide enhanced on-device functions, communication-related functions, or both.

In a data communication mode, a received signal such as a text message or web page download will be processed by the communication subsystem 511 and input to the processor 538, which may further process the received signal for output to the display 522, or alternatively to an auxiliary I/O device 528.

A user of mobile device 500 may also compose data items such as email messages for example, using the keyboard 532, which may be a complete alphanumeric keyboard or telephone-type keypad, among others, in conjunction with the display **522** and possibly an auxiliary I/O device 528. Such composed items may then be transmitted over a communication network through the communication subsystem **511.**

For voice communications, overall operation of mobile device **500** is similar, except that received signals would typically be output to a speaker **534** and signals for transmission would be generated by a microphone **536**. Alternative voice or audio I/O subsystems, such as a voice message recording subsystem, may also be implemented on mobile device **500.** Although voice or audio signal output is preferably accomplished primarily through the speaker **534**, display **522** may also be used to provide an indication of the identity of a calling party, the duration of a voice call, or other voice call related information for example.

Serial port **530** in **Figure 5** would normally be implemented in a personal digital assistant (PDA)-type mobile device for which synchronization with a user's desktop computer (not shown) may be desirable, but is an optional device component. Such a port **530** would enable a user to set preferences through an external device or software application and would extend the capabilities of mobile device **500** by providing for information or software downloads to mobile device **500** other than through a wireless communication network. The alternate download path may for example be used to load an encryption key onto the device through a direct and thus reliable and trusted connection to thereby enable secure device communication. As will be appreciated by those skilled in the art, serial port 530 can further be used to connect the mobile device to a computer to act as a modem.

Other communications subsystems 540, such as a short-range communications subsystem, is a further optional component which may provide for communication between mobile device 500 and different systems or devices, which need not necessarily be similar devices. For example, the subsystem 540 may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for enabling handover of a mobile device in a network, the method comprising:
if channel conditions exceed a threshold, sending, from a mobile device, a request or message utilizing a control channel; and
if channel conditions do not exceed the threshold, delaying the sending of the request or message to permit a handover message to use the control channel.

2. The method of claim 1, wherein the network supports only a single unacknowledged control block on the control channel.

3. The method of claim 1 or claim 2, further comprising checking, prior to the sending or delaying, whether the channel conditions exceed a threshold.

4. The method of any one of claims 1 to 3, wherein the mobile device is on a circuit switched call and the method is performed utilizing dual transfer mode ('DTM').

5. The method of claim 4, wherein the request or message is a DTM REQUEST or is an upper layer control message.

6. The method of any one of claims 1 to 5, wherein the delaying is for one measurement cycle.

7. The method of claim 1, further comprising ending the method if a stop condition is realized, the stop condition being a handover or ending a circuit switched call.

8. The method of any one of claims 1 to 7, wherein the delaying further comprises buffering or queuing uplink data.

9. The method of any one of claims 1 to 8, wherein the checking determines if a criteria is met, the criteria being one of:
an RXQUAL_SUB level is below a threshold for two or more measurement periods;
the RXQUAL_SUB level of burst during a measurement period falls below a threshold; or
the RXQUAL_SUB level is below a threshold and a neighbor cell is stronger than a serving cell.

10. A mobile device configured for enabling handover in a network, the mobile device comprising:
a processor;
a communications subsystem; and
memory,
wherein the processor, communications subsystem and memory cooperate to perform the method of any one of claims 1 to 9.

11. A method for enabling handover of a mobile device at a network element, the method comprising:
if channel conditions exceed a threshold, sending, from the network element, a request or message utilizing a control channel; and
if channel conditions do not exceed the threshold, prioritizing a handover message over the request or message, or sending the handover message from the network element to the mobile device.

12. The method of claim 11, wherein the mobile device is on a circuit switched call and the method is performed utilizing dual transfer mode ('DTM').

13. The method of claim 12, wherein the request or message is a DTM ASSIGNMENT, PACKET ASSIGNMENT or upper layer control message.

14. The method of any one of claims 11 to 13, wherein the prioritizing further comprising delaying to determine if channel conditions are improving or deteriorating.

15. A network element configured for enabling handover of a mobile device, the network element comprising:
a processor;
a communications subsystem; and
memory,
wherein the processor, communications subsystem and memory cooperate to perform the method of any one of claims 11 to 14.
